# EUROPÄISCHE PATENTSCHRIFT

(11) **EP 3 316 981 B1**
(45) Veröffentlichungstag und Bekanntmachung des Hinweises auf die Patenterteilung: **21.10.2020**
(21) Anmeldenummer: 16733503.3
(22) Anmeldetag: 29.06.2016
(51) Int. Cl.: B01D 3/32

(54) **DESTILLATIONSEINRICHTUNG UMFASSEND EINE KOLONNE, MIT DREI ODER MEHREREN HINTEREINANDER FLÜSSIGKEITSDURCHSTRÖMTEN ZELLEN UND VERFAHREN ZUR DESTILLATION ODER EXTRAKTIVDESTILLATION UNTER VERWENDUNG DER DESTILLATIONSEINRICHTUNG**
DISTILLATION DEVICE COMPRISING A COLUMN WHICH HAS THREE OR A PLURALITY OF CELLS IN SERIES THROUGH WHICH FLUID FLOWS AND METHOD FOR DISTILLING OR EXTRACTIVE DISTILLATION BY USE OF THE DISTILLATION DEVICE
DISPOSITIF DE DISTILLATION COMPRENANT UNE COLONNE, PRÉSENTANT AU MOINS TROIS CELLULES TRAVERSÉES SUCCESSIVEMENT PAR UN LIQUIDE, ET PROCÉDÉ DE DISTILLATION OU DE DISTILLATION EXTRACTIVE AU MOYEN DE CE DISPOSITIF DE DISTILLATION

(30) Priorität: 03.07.2015 EP 15175275
(43) Veröffentlichungstag der Anmeldung: 09.05.2018
(73) Patentinhaber: BASF SE, 67056 Ludwigshafen am Rhein (DE)
(72) Erfinder: ASPRION, Norbert, 67063 Ludwigshafen (DE); HEIDA, Bernd, 67158 Ellerstadt (DE); WEIDERT, Jan-Oliver, 67105 Schifferstadt (DE); LANG, Ortmund, 66909 Quirnbach (DE)
(74) Vertreter: BASF IP Association
(86) Internationale Anmeldenummer: PCT/EP2016/065092
(87) Internationale Veröffentlichungsnummer: WO 2017/005565

(56) Entgegenhaltungen:
- EP-A1- 0 366 019
- EP-A1- 0 589 230
- EP-A1- 1 362 625
- US-A- 4 601 788
- US-A1- 2008 161 618
- ZA-A- 9 704 354

## Beschreibung

Die Erfindung betrifft eine Destillationseinrichtung umfassend eine Kolonne, mit drei oder mehreren hintereinander flüssigkeitsdurchströmten Zellen und ein Verfahren zur Destillation oder Extraktivdestillation unter Verwendung der Destillationseinrichtung.

Großtechnische Verfahren zur Auftrennung von Stoffgemischen durch Destillation und insbesondere durch Extraktivdestillation sind häufig sehr energieintensiv. Daher wird in bekannten Anlagen die Sumpfflüssigkeit häufig mehrstufig, insbesondere in hintereinander geschalteten Verdampfern, aufgeheizt. Dabei bildet sich jeweils ein zweiphasiges Flüssigkeits-/Dampf-Gemisch, das beim Übergang von einer auf die nächste Verdampferstufe gleichmäßig verteilt werden muss. Dies kann zwar in einfacher Weise dadurch erreicht werden, dass die einzelnen Verdampferstufen stehend übereinander angeordnet werden, jedoch mit dem Nachteil, dass dadurch die bereits ohne diese Maßnahme relativ hohen Kolonnen noch zusätzlich hochgesetzt werden müssen, mit entsprechenden konstruktiven Schwierigkeiten, insbesondere Stabilitätsproblemen und entsprechenden Kosten zur Lösung dieser Schwierigkeiten.

Das obige Problem könnte durch eine liegende Anordnung von horizontal hintereinander durchströmten Verdampferstufen vermieden werden, eine derartige Anordnung ist jedoch aufgrund der Verteilungsproblematik eines zweiphasigen Gemisches aus einer Verdampferstufe beim Eintritt in die nächstfolgende Verdampferstufe unvorteilhaft.

Die EP 0 366 019 A1 offenbart einen Teilverdampfer mit zwei Verdampferbecken, worin eine Trennwand einen Verdampfungsabschnitt abtrennt und Flüssigkeit vom oberen Verdampferbecken in das untere Verdampferbecken überfließt.

Die ZA 9 704 354 offenbart ein Verfahren zum Entfernen störender schwer siedender Komponenten aus dem Lösungsmittelkreislauf von regenerierbaren Absorptionsprozessen. Dem Aufkocher, in dem störende Hochsieder angereichert werden, werden außerdem Leichtsiederkomponenten des Lösungsmittel zugeführt. Der erzeugte Dampf wird als Strippdampf in der Regenerationsstufe verwendet.

Die US 2008/0161618 offenbart ein Verfahren zur Isolierung von 1-Buten aus einem n-Butan, Isobutan und Butenisomere umfassenden Zulaufstrom.

Es war daher Aufgabe der vorliegenden Erfindung, eine Destillationseinrichtung für insbesondere großtechnische Verfahren zur Verfügung zu stellen, die die obigen Probleme nicht aufweist, und die es darüber hinaus ermöglicht, vorhandene Energiequellen für die einzelnen Verdampferstufen möglichst adäquat, rekuperativ zu nutzen, und somit Investitions- und Energiekosten zu sparen.

Die Aufgabe wird gelöst durch eine Destillationseinrichtung umfassend eine Kolonne (K), zur Auftrennung eines Zulaufstromes (1) in einen Kopfproduktstrom (2), einen Sumpfproduktstrom (3) und gegebenenfalls einen oder mehrere Seitenabzugsströme, mit drei oder mehr hintereinander flüssigkeitsdurchströmten Zellen (I, II, III), wobei zumindest die erste Zelle in den Sumpf der Kolonne (K) integriert ist, zur mehrstufigen Aufheizung und Teilverdampfung der die Zellen durchströmenden Flüssigkeit mit Ausnahme der Flüssigkeit aus der letzten Zelle in jeweils einer Verdampferstufe dadurch gekennzeichnet, dass Mittel zur Leitung der Flüssigkeit aus jeder der drei oder mehreren hintereinander flüssigkeitsdurchströmten Zellen (I, II, III) mit Ausnahme der letzten Zelle durch eine Verdampferstufe zum Teilverdampfen der Flüssigkeit darin unter Erhalt jeweils eines teilverdampften Stromes (4,5), Mittel zur vollständigen oder teilweisen Zuführung des teilverdampften Stroms (4,5) in die jeweils in Strömungsrichtung nächstfolgenden Zelle und ein Flüssigkeitsrücklauf aus einer oder mehreren der drei oder mehr Zellen (I, II, III), mit Ausnahme der ersten Zelle in die jeweils unmittelbar vorhergehende Zelle vorgesehen sind. Die Aufheizung und Teilverdampfung der die drei oder mehreren Zellen hintereinander durchströmenden Flüssigkeit in jeder der Verdampferstufen mit Ausnahme der Flüssigkeit aus der letzten der hintereinander angeordneten Zellen erfolgt mittels jeweils geeigneter Energiequellen.

Destillationsverfahren sind die in der chemischen Industrie am häufigsten eingesetzten thermischen Trennverfahren.

Eine Stofftrennung durch Destillation beruht auf dem Prinzip, dass sich Mischungen unterschiedlich siedender Stoffe beim partiellen Verdampfen/Kondensieren in der Dampf- und der Flüssigkeitsphase unterschiedlich anreichern. Die mehrstufige Destillation in Destillationskolonnen erfolgt in der Regel durch partielle Verdampfung der Sumpfflüssigkeit und partielle Kondensation des Kopfaustrags. Der Dampf aus dem Verdampfer sowie ein Teil des Kondensats werden in die Kolonne zurückgeführt. Trennwirksame Einbauten wie Füllkörper, strukturierte Packungen oder Böden ermöglichen einen guten Wärme- und Stoffaustausch zwischen der herablaufenden Flüssigkeit und dem aufsteigenden Dampf und damit in der Regel eine Trennleistung, die mehreren hintereinandergeschalteten theoretischen Dampf-/Flüssigkeits-Gleichgewichtsstufen entspricht.

Bei schwer zu trennenden Stoffgemischen wegen eng beieinander liegender Siedepunkte oder aufgrund einer ungünstigen Siedereihenfolge kann durch Zugabe eines flüssigen Lösungsmittels die Trennung aufgrund unterschiedlichen Lösungsverhaltens der Stoffe im flüssigen Lösungsmittel vereinfacht werden. Im Gegensatz zur Absorption, bei der üblicherweise kein Verdampfer oder Kondensator zum Einsatz kommt, spricht man bei der Verwendung eines Lösungsmittels in der Destillationskolonne von Extraktivdestillation. Zum Teil wird hierbei durch Auftreten einer zweiten flüssigen Phase die Trennung noch verbessert.

Sowohl Destillationskolonnen als auch Extraktivdestillationskolonnen besitzen mindestens einen in den Kolonnensumpf integrierten oder an den Kolonnensumpf angeschlossenen externen Verdampfer, über den die gesamte oder Teile der für die Auftrennung benötigten Energie eingebracht werden. Gegebenenfalls kann auch ein Teil der für die Auftrennung benötigten Energie durch Vorverdampfer und/oder Seitenverdampfer unterhalb des Zulaufstroms und oberhalb des Sumpfes eingebracht werden.

Hierfür müssen häufig, insbesondere in großtechnischen Anlagen, große Energiemengen eingebracht werden, sodass die Sumpfflüssigkeit in mehreren Stufen aufgeheizt werden muss.

Destillationskolonnen in großtechnischen Anlagen weisen häufig Durchmesser ab ca. 0,5 m bis ca. 6 oder auch 7 m, insbesondere zwischen etwa 2 und 5 m, auf. Typischer Weise sind Destillationskolonnen in großtechnischen Anlagen ca. 10-30 m hoch oder höher. Als Verdampferstufe eingesetzte außenliegende Rohrbündelwärmetauscher weisen häufig bei Verwendung als Naturumlaufverdampfer eine Länge in Richtung der Rohre von ca. 2 bis 3 m auf.

Sie sind für hohe Durchsätze ausgelegt: die Sumpfproduktströme liegen häufig im Bereich von hunderten Tonnen pro Stunde.

Erfindungsgemäß wird eine Destillationseinrichtung insbesondere für großtechnische Trennverfahren vorgeschlagen, die eine mehrstufige Aufheizung und Teilverdampfung der Flüssigkeit gewährleistet, und die es durch die vorstehend angegebene und im Nachfolgenden im Detail erläuterte Ausgestaltung ermöglicht, in mehreren einphasig flüssigkeitsbeaufschlagten Stufen die Flüssigkeit stufenweise partiell zu verdampfen und bis auf die Temperatur zu erhitzen, die erforderlich ist, damit der flüssige Sumpfproduktstrom mit der vorgegebenen Spezifikation abziehbar ist.

Ausgegangen wird hierzu von einer Destillationseinrichtung, die, wie üblich, eine Kolonne zur Auftrennung eines mehrere Komponenten enthaltenden Zulaufstromes in einen Kopfproduktstrom, einen Sumpfproduktstrom und gegebenenfalls einen oder mehrere Seitenabzugsströme mit jeweils vorgegebenen Spezifikationen umfasst.

Die erfindungsgemäß vorgeschlagene Destillationseinrichtung ist mit drei oder mehreren, in Richtung des Flüssigkeitsstroms hintereinander angeordneten Zellen ausgestattet. Mit der Flüssigkeit oder einem Teilstrom der Flüssigkeit aus diesen Zellen, mit Ausnahme der letzten der hintereinander angeordneten Zellen, aus der der Sumpfproduktstrom abgezogen wird, wird jeweils eine Verdampferstufe zur Aufheizung und Teilverdampfung einphasig flüssig beaufschlagt.

Die Zellen sind jeweils Behälter, die hintereinander von Flüssigkeit durchströmt werden, wobei die jeden Behälter durchströmende Flüssigkeit getrennt auf eine in Strömungsrichtung jeweils höhere Temperatur erhitzt und teilweise verdampft wird. In Strömungsrichtung nimmt somit die Temperatur in den einzelnen Zellen zu und parallel hierzu nimmt, infolge der Teilverdampfung, die Konzentration an leichtsiedenden Komponenten ab.

Die Behälter können dabei unmittelbar nebeneinander oder auch mit größerem Abstand zueinander angeordnet sein. Dabei ist es jedoch wichtig, dass Flüssigkeit nicht unmittelbar aus dem vorhergehenden in den jeweils nächstfolgenden Behälter laufen kann. Dagegen ist ein teilweiser Rücklauf der Flüssigkeit aus dem nächstfolgenden Behälter in den jeweils vorhergehenden vorgesehen.

Zwei, drei oder sämtliche der drei oder mehreren Zellen können in den Kolonnensumpf integriert sein.

In einer bevorzugten Ausführungsform umfasst die Destillationseinrichtung eine Kolonne mit dreigeteiltem Sumpf, das heißt in den Kolonnensumpf sind drei hintereinander von Flüssigkeit durchströmte Zellen integriert. Hierzu ist der untere Kolonnenbereich mittels vertikaler Trennwände, die vom unteren Boden der Kolonne bis auf eine gewisse Höhe in den unteren Kolonnenbereich hineinragen, in drei Teilbereiche aufgeteilt, wobei die Höhe der Trennwände zwischen den einzelnen Teilbereichen in Strömungsrichtung der Flüssigkeit zunimmt.

Die Trennwände können insbesondere als konzentrische Zylinder oder als ebene Trennbleche ausgebildet sein, die, im Kolonnenquerschnitt betrachtet, entlang von Kreissehnen oder Kreisradien angeordnet sind.

Von den auf die erste flüssigkeitsdurchströmte Zelle folgenden Zellen können eine, zwei oder sämtliche der Zellen außerhalb des Kolonnensumpfes angeordnet und insbesondere als der von Flüssigkeit durchströmte Teil eines Gas-/Flüssigkeitsabscheiders ausgebildet sein.

Erfindungsgemäß wird die Flüssigkeit, die jede der drei oder mehreren hintereinander angeordneten Zellen, mit Ausnahme der letzten der hintereinander angeordneten Zellen, aus der der Sumpfproduktstrom abgezogen wird, durchströmt, jeweils unabhängig voneinander in jeweils einer Verdampferstufe mittels einer jeweils geeigneten Energiequelle aufgeheizt und teilverdampft.

Durch die spezielle, erfindungsgemäße Ausgestaltung der Destillationseinrichtung ist es möglich, jeweils einen einphasigen flüssigen Strom mit der vom Energieinhalt am Besten passenden und zur Verfügung stehenden Energiequelle aufzuheizen. Dabei können die geeigneten Energiequellen prozessinterne und/oder eine externe Energiequellen sein.

Bevorzugte Energiequellen sind Massenströme.

In einer weiteren Ausgestaltung kann als Energiequelle auch elektrische Energie eingesetzt werden.

Als Massenströme sind Wasserdampf oder heißes Kondensat bevorzugt.

Vorteilhaft kann als Energiequelle Wasserdampf oder heißes Kondensat eingesetzt werden, die prozessintern generiert worden sind.

In einer bevorzugten Ausführungsform sind die Verdampferstufen, in die Flüssigkeit aus jeder der drei oder mehreren hintereinander flüssigkeitsdurchströmten Zellen mit Ausnahme der zuletzt flüssigkeitsdurchströmten Zelle geleitet, darin erhitzt und unter Erhalt jeweils eines teilverdampften Stromes, der der jeweils in Strömungsrichtung nächstfolgenden Zelle vollständig oder teilweise zugeführt wird teilverdampft wird, als einzelne Wärmetauscher ausgebildet. Dabei können die Wärmetauscher jeweils als einfache oder auch als mehrere parallel angeordnete Wärmetauscher angebracht sein.

Die Anordnung aus Wärmetauscher und in Strömungsrichtung nächstfolgender Zelle kann auch durch eine andere, thermodynamisch äquivalente Anordnung, insbesondere durch einen Fallfilmverdampfer oder einen Aufkocher (Kesselverdampfer) vom Kettle-Typ ausgetauscht sein.

In Fallfilmverdampfern fließt die zu verdampfende Flüssigkeit als zusammenhängender Film an einer Rohrwand.

Kesselverdampfer oder Kettle-type-Verdampfer sind Verdampfer, die ein beheizbares Rohrbündel umfassen, das in eine Flüssigkeit getaucht ist. Rohrbündel und Flüssigkeit befinden sich in einem Behälter, der als Abscheider dient. Solche Verdampfer werden oft zur Erzeugung von Heizdampf aus flüssigem Wasser verwendet.

Das beheizbare Rohrbündel befindet sich, in der Regel liegend, in einem größeren Behälter, der als Abscheider dient. Die zu verdampfende Flüssigkeit wird dem Behälter in den Bereich des Rohrbündels zugeführt und durch ein Überlaufwehr angestaut, so dass das Rohrbündel getaucht ist. Die Flüssigkeit kocht durch die Beheizung, so dass sich Blasen bilden, die durch das große Volumen des Abscheiders von der Flüssigkeit abgeschieden und aus dem oberen Bereich abgeführt werden. Die nicht verdampfte Flüssigkeit läuft an einem Wehr über und wird dann aus dem Verdampfer abgezogen (aus: Wikipedia).

In diesen Fällen entsprechen die Verdampferstufen jeweils dem Rohrbündel des Fallfilmverdampfers bzw. des Kesselverdampfers des Behälters. Die Zellen werden durch den Sumpf des Fallfilmverdampfers bzw. durch den Bereich des Kesselverdampfers gebildet, der neben dem Wehr angeordnet ist und in dem nicht der Rohrbündelwärmetauscher des Kesselverdampfers liegt.

Erfindungsgemäß ist ein Flüssigkeitsrücklauf aus einer oder mehreren der drei oder mehreren hintereinander flüssigkeitsdurchströmten Zellen mit Ausnahme der zuerst flüssigkeitsdurchströmten Zelle in die jeweils unmittelbar vorhergehende Zelle vorgesehen, insbesondere als direkter Flüssigkeitsüberlauf über ein Wehr, als getauchter Zulauf oder als Siphon.

Gegenstand der Erfindung ist auch ein Verfahren zur Durchführung einer Destillation oder Extraktivdestillation unter Verwendung der vorstehend beschriebenen Destillationseinheit.

Bei dem Verfahren handelt es sich beispielsweise um ein Verfahren zur Trennung eines die Stoffe A und B enthaltenden Zulaufstroms (1) durch Extraktivdestillation unter Verwendung eines Extraktionsmittels mit einer höheren Affinität zu B als zu A, wobei man
a) den Zulaufstrom (1) dem Extraktionsmittel in der Kolonne (K) entgegenführt, wobei ein A enthaltender Kopfproduktstrom (2) sowie eine B und Extraktionsmittel enthaltende Flüssigkeit erhalten wird,
b) die B und Extraktionsmittel enthaltende Flüssigkeit in der Kolonne in die erste, in den Sumpf der Kolonne (K) integrierte Zelle abfließen lässt,
c) Flüssigkeit aus jeder der drei oder mehr Zellen (I,II,III) mit Ausnahme der letzten Zelle durch jeweils eine Verdampferstufe leitet und darin aufheizt und teilverdampft unter Erhalt jeweils eines teilverdampften Stromes (4,5), der der jeweils in Strömungsrichtung nächstfolgenden Zelle vollständig oder teilweise zugeführt wird, und
d) den Sumpfproduktstrom (3) aus der letzten Zelle abzieht.

In einer Ausführungsform des Verfahrens steht A für Butan und B für Buten. In einer anderen Ausführungsform des Verfahrens steht A für Buten und B für 1,3-Butadien.

In dem erfindungsgemäßen Verfahren hat das Extraktionsmittel eine höhere Affinität zu B als zu A. D.h., dass das Extraktionsmittel mit B stärkere Wechselwirkungen eingeht, als mit A. Die Affinität des Extraktionsmittels zu A bzw. zu B kann der Fachmann z.B. dadurch bestimmen, dass er die Löslichkeit von A bzw. B im Extraktionsmittel bestimmt. Beispielsweise kann er je ein Aliquot Extraktionsmittel unter einer Atmosphäre von A und einer Atmosphäre von B rühren und ermitteln, wie viel von A bzw. B sich im Extraktionsmittel gelöst hat.

Wenn A für Butan und B für Buten steht und wenn A für Buten und B für 1,3-Butadien steht, kann man das Extraktionsmittel beispielsweise auswählen aus Dimethylformamid, N-Methylpyrrolidon, Acetonitril, Furfural und Dimethylsulfoxid. Wenn A für Buten und B für 1,3-Butadien steht, setzt man beispielsweise ein N-Methylpyrrolidon enthaltendes Extraktionsmittel ein, welches vozugsweise 85 bis 95 Gew.-% N-Methylpyrrolidon und 6 bis 12 % Gew.-% Wasser enthält.

Eine Ausführungsform des erfindungsgemäßen Verfahrens betrifft ein Verfahren zur Trennung von Butan und Buten durch Extraktivdestillation. Der Zulaufstrom enthält neben einem oder mehrern isomeren Butanen eines oder mehrere isomere Butene. Neben Butan(en) und Buten(en) kann der Strom insbesondere auch Butadien(e) enthalten, welche sich dann neben den Buten(en) im Sumpfproduktstrom anreicherern.

Eine andere Ausführungsform des erfindungsgemäßen Verfahrens betrifft ein Verfahren zur Trennung von Buten und Butadien durch Extraktivdestillation. Der Zulaufstrom enthält neben einem oder mehreren isomeren Butenen auch Butadien(e). Neben Buten(en) und Butadien(en) kann der Strom insbesondere auch Butan(e) enthalten, wobei sich Butan(e) und Buten(e) im Kopfproduktstrom und Butadien(e) Sumpfproduktstrom Extraktionsmittel anreichern.

Das Verfahren kann besonders vorteilhaft eine Extraktivdestillation zur Auftrennung eines Reaktionsgemisches aus der Dehydrierung von Butanen zur Herstellung von Butenen oder aus einer Oxidehydrierung von Butanen zur Herstellung von Butadien sein. Im Falle von Extraktivdestillationen bietet sich als besonders geeignete Energiequelle das heiße regenerierte Lösungsmittel an.

Die Erfindung wird im Folgenden anhand einer Zeichnung sowie eines Ausführungsbeispiels näher erläutert.

In den Figuren bezeichnen gleiche Bezugszeichen jeweils gleiche oder entsprechende Merkmale.

Es zeigen im Einzelnen:
- Figur 1: eine schematische Darstellung einer bevorzugten Ausführungsform einer erfindungsgemäßen Destillationseinrichtung mit dreigeteiltem Sumpf, mit Querschnittsdarstellungen für bevorzugte Anordnungen der Trennwände im Kolonnensumpf in den Figuren 1A bis 1C;
- Figur 2: die schematische Darstellung einer weiteren bevorzugten Ausführungsform einer erfindungsgemäßen Destillationseinrichtung mit zwei im Kolonnensumpf integrierten Zellen und einer dritten außerhalb der Kolonne und als Phasenscheider ausgebildeten Zelle III, mit weiteren Varianten für die außerhalb der Kolonne K liegenden Zelle III mit Wärmetauscher WT2 (im Detail in Figur 2A dargestellt) in den Figuren 2B und 2C;
- Figur 3: die schematische Darstellung einer weiteren Ausführungsform für eine bevorzugte Destillationseinrichtung mit zwei außerhalb der Kolonne K angeordneten Zellen II und III;
- Figur 4: eine weitere Variante für eine bevorzugte Destillationseinrichtung mit zwei außerhalb der Kolonne K angeordneten Zellen II und III;
- Figur 5: eine weitere Variante für eine bevorzugte Destillationseinrichtung mit zwei außerhalb der Kolonne K angeordneten Zellen II und III;
- Figur 6: die schematische Darstellung einer Destillationseinrichtung mit in der Kolonne integrierten Zellen I und III und außerhalb der Kolonne angeordneter Zelle II;
- Figur 7: eine Destillationseinrichtung nach dem Stand der Technik mit zweistufiger Aufheizung der Flüssigkeit aus dem Kolonnensumpf in zwei vertikal übereinander angeordneten Wärmetauschern;
- Figur 8: die schematische Darstellung einer weiteren Ausführungsform einer Destillationseinrichtung nach dem Stand der Technik mit zweistufiger Aufheizung der Flüssigkeit aus dem Kolonnensumpf in zwei horizontal hintereinander angeordneten Wärmetauschern;
- Figur 9: eine schematische Darstellung einer weiteren Ausführungsform einer Destillationseinrichtung nach dem Stand der Technik mit zweigeteiltem Sumpf und
- Figur 10: eine schematische Darstellung einer bevorzugten Ausführungsform einer erfindungsgemäßen Destillationseinrichtung mit dreigeteiltem Sumpf.

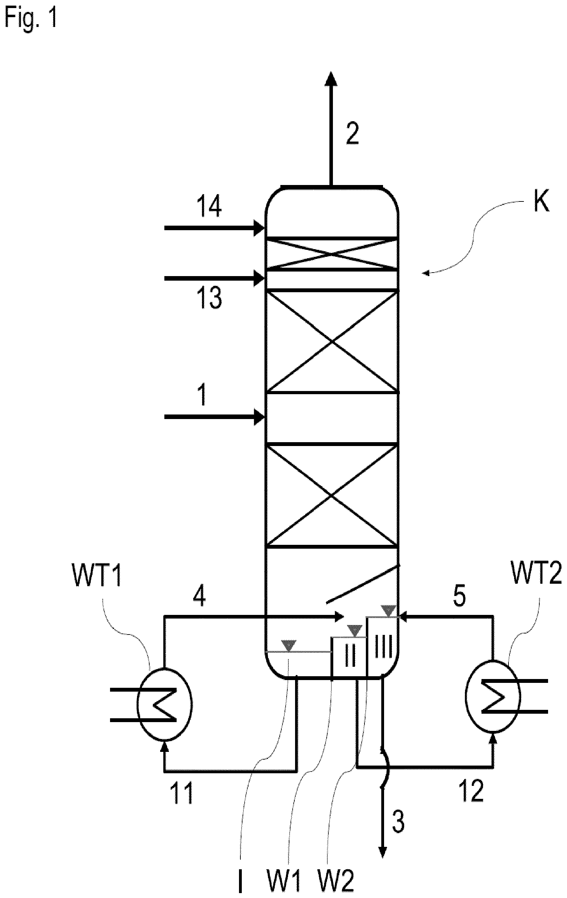

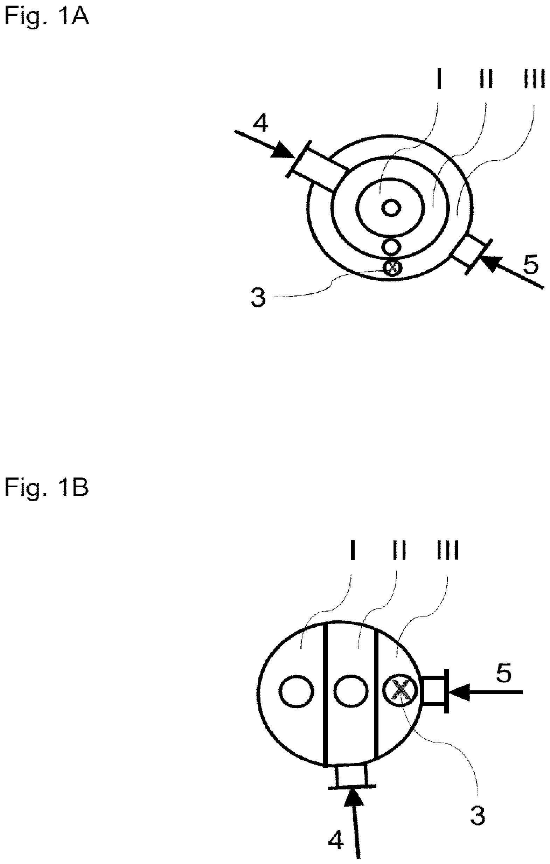

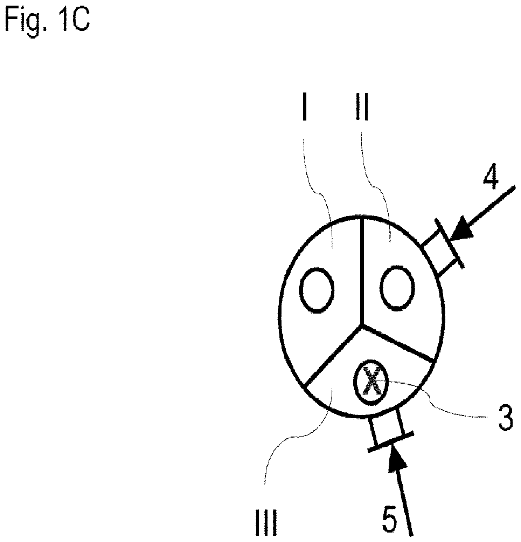

Figur 1 zeigt die schematische Darstellung einer bevorzugten Ausführungsform einer erfindungsgemäßen Destillationseinrichtung mit einer Kolonne K, zur Auftrennung eines Zulaufstromes 1 in einen Kopfproduktstrom 2 mit einem Sumpfproduktstrom 3, mit drei hintereinander flüssigkeitsdurchströmten Zellen I, II und III, wobei sämtliche flüssigkeitsdurchströmten Zellen I-III im Sumpf der Kolonne K integriert und gegeneinander durch Wehre W1, W2 getrennt sind. Der Sumpfstrom aus der in Strömungsrichtung ersten Zelle I wird abgezogen und damit der Wärmetauscher WT1 beaufschlagt, worin der Strom aufgeheizt und teilweise verdampft wird, unter Erhalt eines teilverdampften Stromes 4, der der zweiten Zelle II, zugeführt wird. Der Sumpfstrom aus der zweiten Zelle II wird ebenfalls flüssig abgezogen, und in einem außenliegenden Wärmetauscher WT2 aufgeheizt und teilweise verdampft, und als teilverdampfter Strom 5 in der dritten flüssigkeitsdurchströmten Zelle III zugeführt.

Die Querschnittsdarstellungen in den Figuren 1A-1C zeigen jeweils bevorzugte Anordnungen für die Trennwände zur Aufteilung des Kolonnensumpfes in die drei hintereinander angeordneten, flüssigkeitsdurchströmten Zellen I-III: eine konzentrische Anordnung der Trennwände in Figur 1A, eine Anordnung in Form von Kreissehnen in Figur 1B bzw. in Form von Kreisradien in Figur 1C.

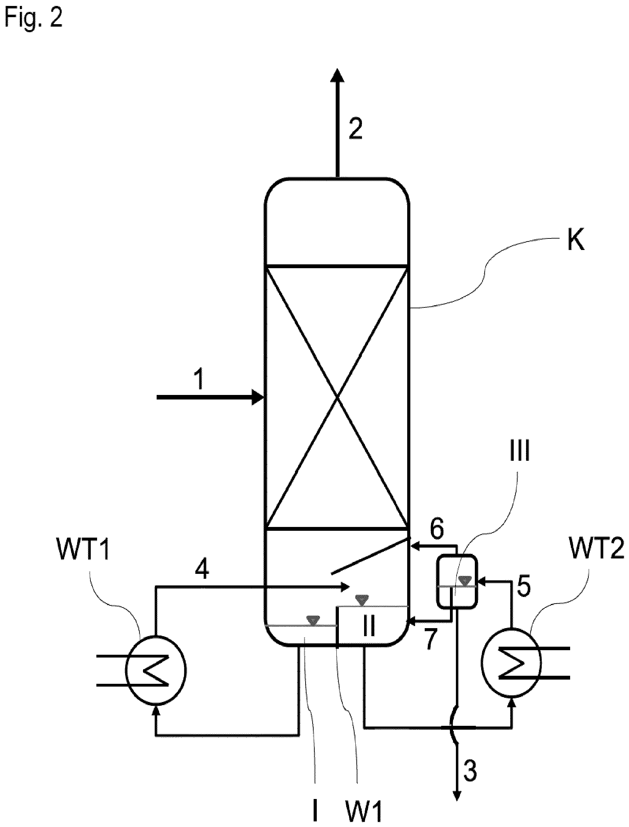

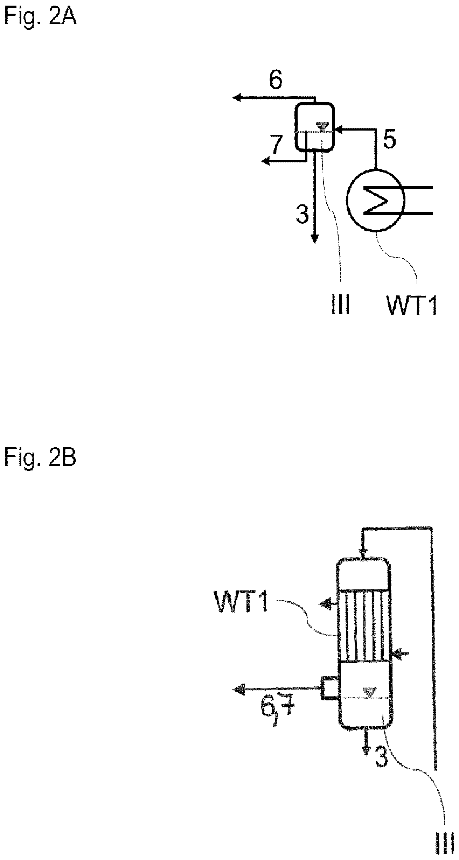

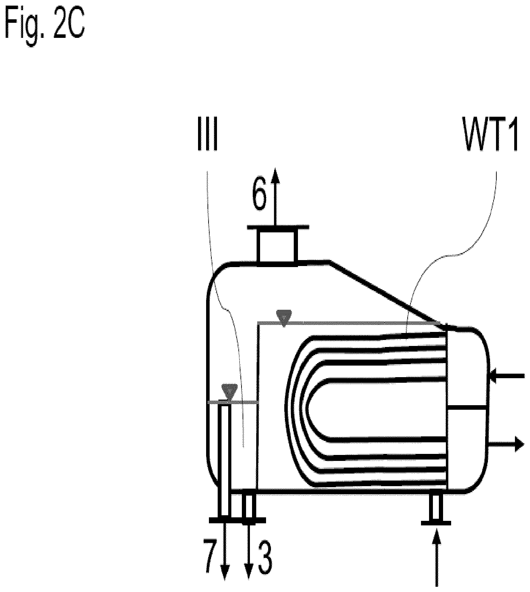

Figur 2 zeigt die schematische Darstellung einer weiteren bevorzugten Ausführungsform einer erfindungsgemäßen Destillationseinrichtung, mit zwei im Sumpf der Kolonne K angeordneten Zellen I und II und einer dritten, außerhalb der Kolonne K, als getrennter Apparat, und zwar als Phasenscheider ausgebildeter Zelle III. Aus derselben wird ein Dampfstrom 6 erneut in den unteren Bereich der Kolonne K, oberhalb des Flüssigkeitsspiegels im derselben und ein Teilstrom der Flüssigkeit in die im Sumpf der Kolonne K integrierte Zelle II zurückgeführt.

Figur 2A zeigt ein Detail der Anlage aus Figur 2, und zwar die Anordnung aus Zelle III und dem zugehörigen Wärmetauscher WT2.

Diese Anordnung kann durch die in den Figuren 2B bzw. 2C dargestellten Alternativen ausgetauscht werden: Figur 2B zeigt als Alternative einen Fallfilmverdampfer mit einem integrierten Rohrbündelwärmetauscher, der in diese Ausführungsform die Verdampferstufe WT1 darstellt und einen flüssigkeitsdurchströmten Sumpfbereich, der die flüssigkeitsdurchströmte Zelle III darstellt. Die Flüssigkeit fließt in dieser Ausführungsform durch die beheizten Rohre des integrierten Wärmetauschers, verdampft teilweise und wird in einem Dampfstrom 6 und zwei Flüssigkeitsteilströme 7 und 3 aufgeteilt.

Die Ausführungsform in Figur 2C zeigt einen Kesselverdampfer, mit in einem Behälter liegenden Rohrbündel, der der Verdampferstufe WT1 entspricht. Die mit einem sekundären Wärmeträger beheizten Rohre erhitzen die Flüssigkeit und verdampfen diese teilweise, unter Erhalt eines gasförmigen Stromes 6 sowie zweier flüssiger Ströme 7 und 3 in dem Bereich des Kesselverdampfers, der durch ein Wehr von dem Bereich getrennt ist, in dem der Rohrbündelwärmetauscher angeordnet ist.

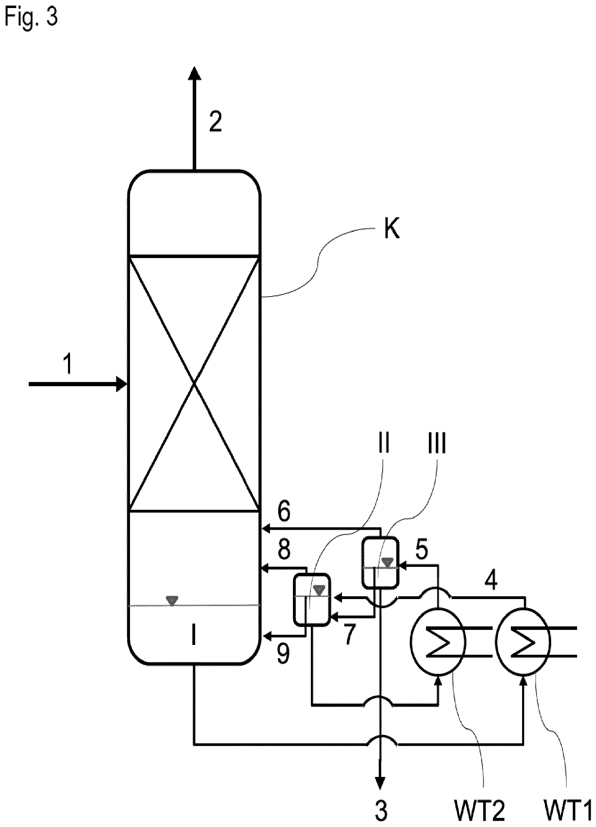

Figur 3 zeigt die schematische Darstellung einer weiteren bevorzugten Ausführungsform einer Destillationseinrichtung mit zwei außerhalb der Kolonne K angeordneten Zellen II und III, die jeweils als Phasenscheider ausgebildet sind. Aus der Zelle II wird der Dampfstrom 8 in den unteren Bereich der Kolonne K, oberhalb des Flüssigkeitsspiegels in derselben, und ein Teilstrom der Flüssigkeit, Strom 9, unterhalb des Flüssigkeitsspiegels in die Kolonne K, in die Zelle I, zurückgeführt. Aus der Zelle III wird der Dampfstrom 6 ebenfalls in den unteren Bereich der Kolonne K, oberhalb des Flüssigkeitsspiegels in derselben, zurückgeführt, und ein Teilstrom der Flüssigkeit, Strom 7, in die Zelle II, unterhalb des Flüssigkeitsspiegels in derselben.

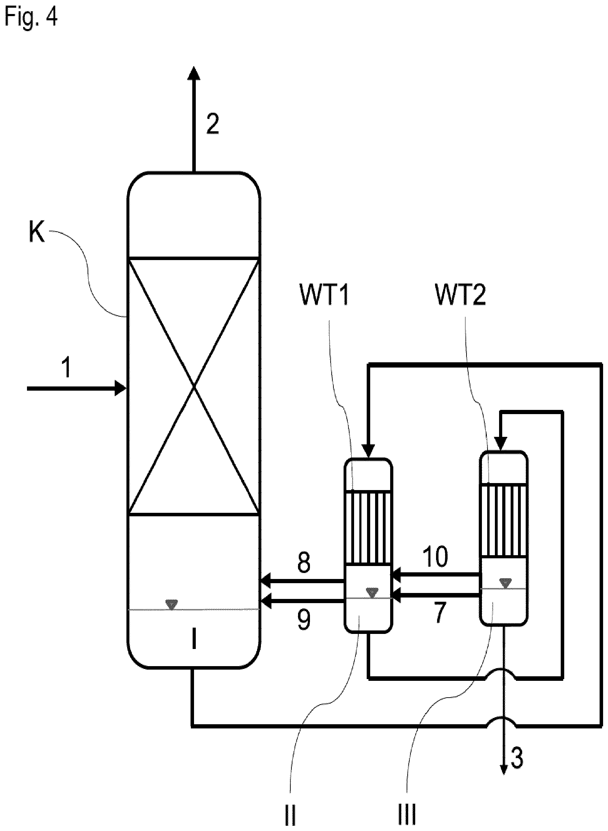

Figur 4 zeigt eine Variante der in Figur 3 dargestellten Ausführungsform, wobei die beiden außerhalb der Kolonne K liegenden, jeweils aus einer Zelle und einem Verdampfer gebildeten Einheiten als Fallfilmverdampfer ausgestaltet sind. Dabei bildet der Rohrbündelwärmetauscher des Fallfilmverdampfers jeweils die Verdampferstufe (WT1, WT2) und der Sumpfbereich des Fallfilmverdampfers die flüssigkeitsdurchströmten Zellen II bzw. III. Abweichend von der Ausführungsform in Figur 3 wird der Dampfstrom aus der Zelle III, als Strom 10, der Zelle II, oberhalb des Flüssigkeitsspiegels in derselben, zugeführt, nicht jedoch der Kolonne K, wie in der Ausführungsform in Figur 3.

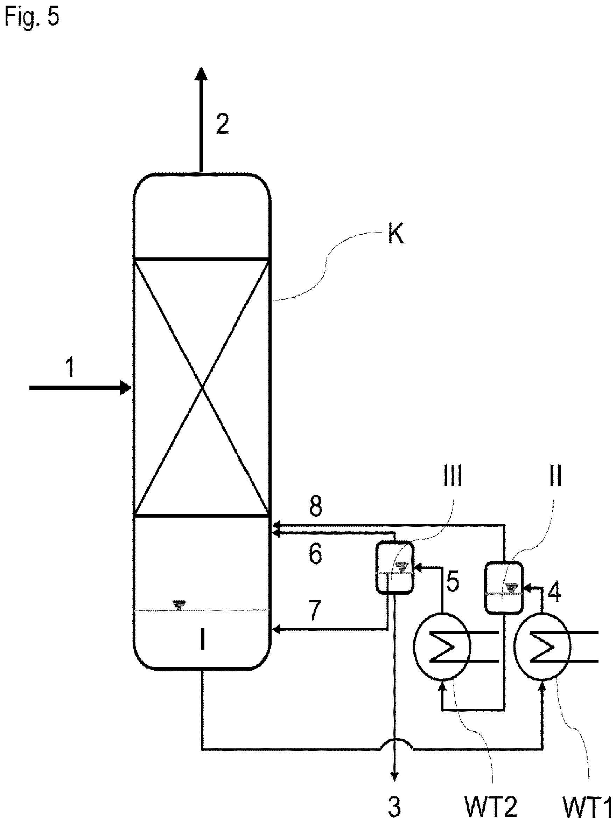

Figur 5 zeigt eine weitere bevorzugte Ausführungsform einer erfindungsgemäßen Destillationseinrichtung mit zwei außerhalb der Kolonne K angeordneten Zellen II und III mit gemeinsamem Umlauf. In dieser Ausführungsform wird der komplette Flüssigkeitsstrom aus der Zelle II dem zweiten Wärmetauscher WT2 zugeführt.

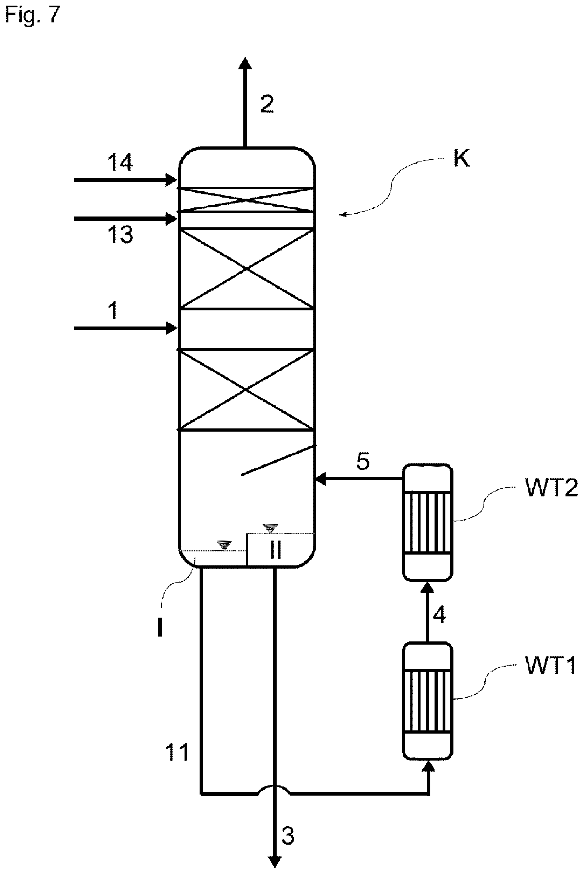

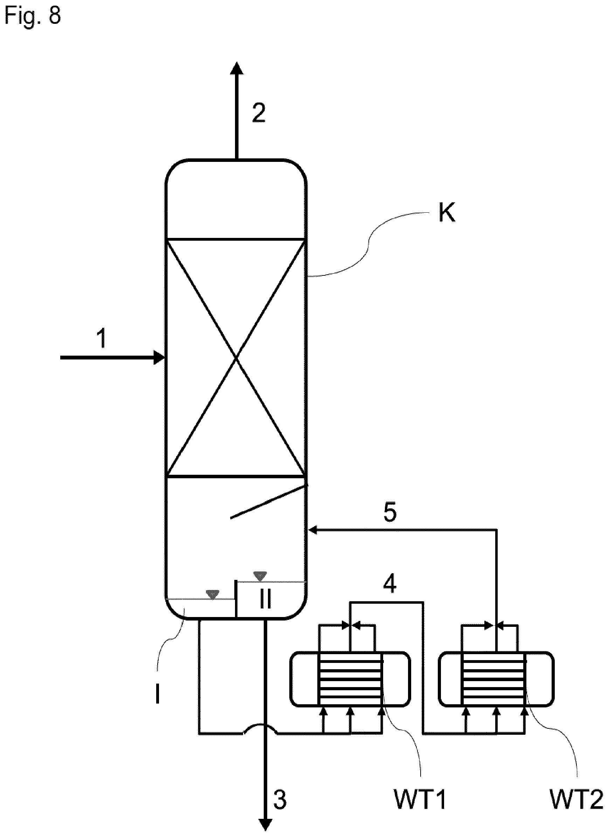

Die Figuren 7 und 8 zeigen Konfigurationen nach dem Stand der Technik:
Nach der in Figur 7 dargestellten Ausführungsform ist der Kolonnensumpf lediglich zweigeteilt, in zwei Zellen I und II, und die aus der Zelle I abgezogene Sumpfflüssigkeit wird zweistufig, in zwei übereinander angeordneten Rohrbündelwärmetauschern aufgeheizt. Dadurch vergrößert sich die jeweils beträchtliche Höhe einer entsprechenden großtechnischen Destillationsanlage weiter, in Bereiche, die aus Stabilitätsgründen kritisch werden können.

Die in Figur 8 dargestellte Ausführungsform zeigt eine weitere Variante einer Destillationseinrichtung nach dem Stand der Technik, mit ebenfalls zweigeteiltem Sumpf der Kolonne K. Die Sumpfflüssigkeit aus der ersten Zelle I wird zweistufig, zwei hintereinander liegenden Rohrbündelwärmetauschern zugeführt. Das zweiphasige, dampfförmige/flüssige Gemisch muss dem zweiten, liegenden Rohrbündelwärmetauscher von unten zugeführt werden und tritt somit über eine oder mehrere punktförmige Stellen über den Zylindermantel in den Innenraum des Rohrbündelwärmeübertrages ein. Die angeströmte Fläche erweitert sich kontinuierlich, bis zur maximalen Breite, entsprechend dem Durchmesser des Apparates, und verengt sich anschließend wieder. Daher ist bei dieser Ausführungsform eine gleichmäßige Verteilung des zweiphasigen Dampf-/Flüssigkeitsgemisches nicht möglich.

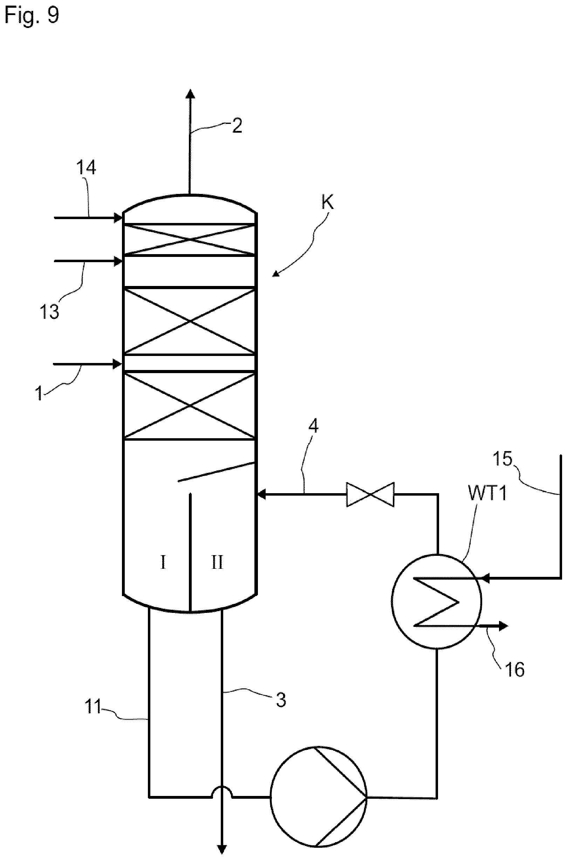

Die in Figur 9 dargestellte Ausführungsform zeigt eine weitere Variante einer Destillationseinrichtung nach dem Stand der Technik, mit ebenfalls zweigeteiltem Sumpf der Kolonne K. Der Sumpfstrom aus der in Strömungsrichtung ersten Zelle I wird flüssig abgezogen. Mit dem Sumpfstrom wird über eine Förderpumpe der Wärmetauscher WT1 beaufschlagt, worin der Sumpfstrom aufgeheizt wird. Der Sumpfstrom wird anschließend entspannt und dabei teilweise verdampft. Der hierbei erhaltene teilverdampfte Strom 4 wird der zweiten Zelle II zugeführt. Als Heizmedium wird dem Wärmetauscher WT1 regeneriertes Extraktionsmittel 15 zugeführt.

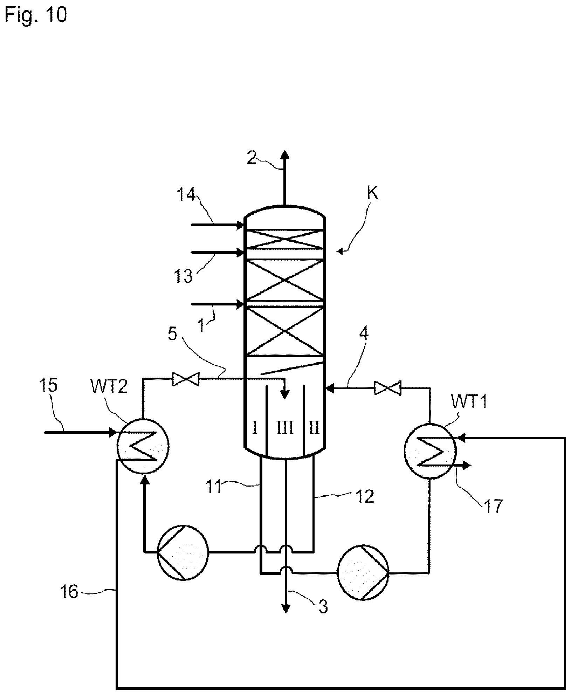

Figur 10 zeigt die schematische Darstellung einer bevorzugten Ausführungsform einer erfindungsgemäßen Destillationseinrichtung mit einer Kolonne K, zur Auftrennung eines Zulaufstromes 1 in einen Kopfproduktstrom 2 mit einem Sumpfproduktstrom 3, mit drei hintereinander flüssigkeitsdurchströmten Zellen I, II und III, wobei sämtliche flüssigkeitsdurchströmten Zellen I-III im Sumpf der Kolonne K integriert und gegeneinander durch Wehre getrennt sind. Der Sumpfstrom aus der in Strömungsrichtung ersten Zelle I wird flüssig abgezogen. Mit dem Sumpfstrom wird über eine Förderpumpe der Wärmetauscher WT1 beaufschlagt, worin der Sumpfstrom aufgeheizt wird. Der Sumpfstrom wird anschließend entspannt und dabei teilweise verdampft. Der hierbei erhaltene teilverdampfte Strom 4 wird der zweiten Zelle II zugeführt. Der Sumpfstrom aus der zweiten Zelle II wird ebenfalls flüssig abgezogen. Mit dem aus der zweiten Zelle II abgezogenen Sumpfstrom wird über eine Förderpumpe der Wärmetauscher WT2 beaufschlagt, worin der Sumpfstrom aufgeheizt wird. Der Sumpfstrom wird anschließend entspannt und dabei teilweise verdampft. Der hierbei erhaltene teilverdampfte Strom 5 wird der dritten Zelle III zugeführt. Als Heizmedium wird dem Wärmetauscher WT1 regeneriertes Extraktionsmittel 15 und dem Wärmetauscher WT2 teilweise abgekühltes regeneriertes Extraktionsmittel 16 zugeführt.

### Ausführungsbeispiele

Die folgenden Beispiele betreffen jeweils eine Extraktivdestillation zur Butane / Butene-Trennung mit Hilfe einer wässrigen N-Methylpyrrolidon (NMP)-Lösung in einer Kolonne, wie in WO 2012/117085 A1 beschrieben. Aufgrund eines vorherigen Absorptionsschritts sind die Butane/Butene bereits teilweise in einer NMP-Lösung gelöst; durch eine Entspannung dieser Lösung auf einen niedrigeren Druck ist der Zulauf (Strom 1) in die Extraktivdestillation zweiphasig, mit einer Gasphase überwiegend aus Butanen und Butenen und der NMP-Lösung mit einer gelösten Butan/Butene-Komponente.

Anforderung der Trennung in der Extraktivdestillationskolonne ist es, einen Kopfproduktstrom 2 zu erhalten, der 6 mol% an gelösten Butenen und Butadienen enthält. Gleichzeitig sollte ein Sumpfproduktstrom erhalten werden, bei dem der Anteil der gelösten Butene und Butadiene an der Gesamtmenge der nicht-Lösungsmittelkomponenten 82.9 mol% beträgt. Diese Trennung wird mit allen im Folgenden beschriebenen Varianten erreicht.

Die Verschaltung wurde mit einem BASF eigenen Simulationsprogramm (ähnlich zu dem kommerziell verfügbaren Simulator ASPEN plus) auf Basis von Phasengleichgewichtsmodellen berechnet. Zur Simulation der Destillationskolonne wurde das Gleichgewichtstufenmodell verwendet. Die Phasengleichgewichte wurden mit Hilfe des Non-Random-Two-Liquid Modells (Renon H., Prausnitz J. M.: Local Compositions in Thermodynamic Excess Functions for Liquid Mixtures, AIChE J., 14(1), S.135-144, 1968) beschrieben.

In den nachfolgenden Ergebnissen der Simulationsrechnung wird hierbei immer eine Destillationskolonne mit 32 theoretischen Stufen (d.h. Gleichgewichtsstufen) betrachtet. Die Nummerierung erfolgt von unten (1) nach oben (32) und beinhaltet nicht den Kolonnensumpf. Die Verdampfer sind als Gleichgewichtsstufen modelliert. Die Gasströme der Verdampfer, deren Ausgang direkt mit der Kolonne verbunden ist, werden direkt auf Stufe 1 der Kolonne zugegeben. Die Zellen sind Bestandteil von Gas-Flüssigkeitsabscheidern, die ebenfalls als Gleichgewichtsstufen abgebildet sind. In diese Gleichgewichtsstufen werden nur flüssige Ströme eingeleitet, dabei entstehendes Gas wird ebenfalls in die Kolonne auf Stufe 1 zugegeben.

### Vergleichsbeispiel 1:

Tabelle 1 gibt einen Überblick über die Phasen, Konzentrationen, Temperaturen und Drücke der Ströme entsprechend Figur 7 nach dem Stand der Technik, (mit zwei hintereinander angeordneten Wämetauschern) bei dem der Verdampfer am Sumpf der Kolonne in zwei Verdampfer WT1 und WT2 unterteilt ist, um Energie aus dem regenerierten Lösungsmittel im WT1 verwenden zu können, bevor es weiter abgekühlt, zum Teil als Lösungsmittel für den Absorptionsschritt und zum anderen Teil als Strom 13 der Extraktivdestillationskolonne zurückgeführt wird (s. WO 2012/117085 A1).

Am Kopf der Kolonne (auf der obersten Stufe) wird Rücklauf (Strom 14) aus den nachfolgenden Kondensatoren in die Kolonne eingespeist, der im Wesentlichen aus Butan besteht. Etwas unterhalb dieser Einspeisestelle (ca. 1-3 theoretische Trennstufen tiefer, hier: 2) wird als Extraktionsmittel die regenerierte, wässrige NMP-Lösung zugegeben (Strom 13). Der Anteil der Flüssigkeit des Zulaufstromes (Strom 1) wird auf Stufe 18 und der gasförmige Anteil auf Stufe 19 zugegeben.

Das aus der Kolonne ablaufende mit im wesentlichen Butanen und Butenen beladene Lösungsmittel 11 wird mit dem Überlauf aus Zelle II gemischt, dabei entstehendes Gas geht auf die unterste Stufe der Kolonne. Aus Zelle I wird der Verdampfer WT1 mit Flüssigkeit beaufschlagt. Der zweiphasige (gasförmige und flüssige) Strom 4 muss auf den Wärmetauscher WT2 gleichmäßig verteilt werden, um eine gleichmäßige und gute Wärmeübertragung zu gewährleisten. Im Verdampfer WT2 wird der Strom weiter erhitzt und partiell verdampft. Die entstandene Gasphase steigt zur ersten Stufe der Kolonne auf und die Flüssigkeit wird in Zelle II geleitet. Dort wird das Sumpfprodukt 3 abgezogen und die überschüssige Flüssigkeit läuft über das Wehr in Zelle I. Die Flüssigkeitsumlaufrate (Massenstrom Strom 11) ist dabei häufig so groß, dass zwischen 2 und 20 % des Stroms, insbesondere 5-15% in den Verdampfern in die Gasphase übergeht.

### Beispiel 1 (erfindungsgemäß)

Die Ströme der erfindungsgemäßen Variante mit teilweiser Rückführung der Flüssigkeit aus den Zellen II und III in die jeweils vorherigen Zellen (I und II) sind in der nachfolgenden Tabelle 2 und in Figur 1 dargestellt.

### Beispiel 2 (erfindungsgemäß)

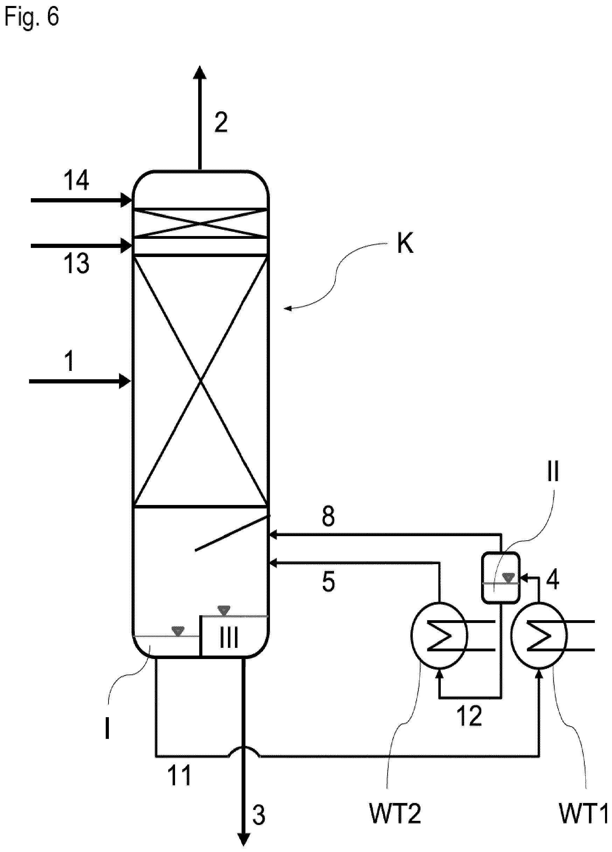

Eine weitere erfindungsgemäße Variante, bei der nur Flüssigkeit aus Zelle III in Zelle I teilweise zurückgeführt wird, ist in der nachfolgenden Tabelle 3 und in Figur 6 dargestellt.

Beide Varianten ermöglichen die gleiche Trennung wie nach dem Vergleichsbeispiel 1, jedoch ohne den Nachteil zu besitzen, dass entweder der zweiphasige Strom verteilt werden muss oder aber durch eine Anordnung übereinander als vertikale Verdampfer, die Kolonne extrem hochgesetzt werden muss.

Die erfindungsgemäßen Varianten besitzen weiterhin noch den Vorteil, dass sowohl die Eintrittstemperatur als auch die Austrittstemperatur des Wärmetauschers WT1 niedriger als im Vergleichsbeispiel 1 sind, obwohl die gleiche Wärmemenge übertragen wird. Diese Temperaturen sind in Tabelle 4 dargestellt. Die Abweichung beträgt sowohl am Eintritt als auch am Austritt über 10 Grad Kelvin bei Variante nach Figur 1 und ca. 4 Grad Kelvin bei der Variante nach Figur 6. Damit steht ein höheres treibendes Temperaturgefälle zur Verfügung, so dass zur Übertragung der gleichen Wärme eine kleinere Wärmeübertragerfläche benötigt wird. Alternativ könnte man in diesen Varianten prinzipiell aber auch entweder mehr Wärme aus dem regenerierten Lösungsmittel, welches zur Beheizung verwendet wird, gewinnen, d.h. man könnte es weiter abkühlen oder aber man könnte auch Wärme aus einem anderen Prozessstrom auf ca. 10 Grad (bei Variante nach Figur 1) niedrigerem Temperaturniveau zurückgewinnen.

### Beispiel 3 (erfindungsgemäß)

Es wurde ein Extraktivdestillationsverfahren zur Extraktion von 1,3-Butadien aus einem C₄-Gemisch (Butane, Butene, Butadien, C₄-Acetylene + geringe Mengen an C₃, C₅₊ Molekülen) für eine Destillationseinrichtung gemäß Figur 10 mit einem Sumpfproduktstrom (Strom 3) von 380 t/h simuliert. Die Temperaturen einzelner Ströme sind nachfolgend wiedergegeben:

| | |
|---|---|
| Regeneriertes Extraktionsmittel 15: | 150,4 °C |
| Teilweise abgekühltes regeneriertes Extraktionsmittel 16: | 138,6 °C |
| Abgekühltes Extraktionsmittel 17: | 90,2 °C |

Die Sumpfströme wurden in WT1 von 68 °C auf 108 °C und in WT2 von 95 °C auf 106 °C erhitzt (die beim Erhitzen erreichten Temperaturen beziehen sich auf den vom jeweiligen Wärmetauscher abströmenden Sumpfstrom vor dessen Entspannung). Die Temperatur des flüssigen Sumpfproduktstroms 3 betrug 104 °C. Durch die hohen treibenden Temperaturgefälle ist für die Wärmeübertragung eine Gesamtfläche von nur 878 m² erforderlich.

### Vergleichsbeispiel 2

Bei Durchführung derselben Simulation wie für Beispiel 3, jedoch mit einer Destillationseinrichtung gemäß Figur 9 zeigte sich, dass unter denselben Randbedingungen (gleiche Zusammensetzung, Menge und Temperatur der zu- und ablaufenden Ströme) eine um 13,6 % größere Fläche zur Wärmeübertragung erforderlich ist.

**Tabelle 1**

| Strom | | | 1 | 1 | 13 | 14 | 11 | 4 | 4 | 8 | 8 | 5 | 3 |
|---|---|---|---|---|---|---|---|---|---|---|---|---|---|
| Aggregat | | | Fluss | Gas | Fluss | Fluss | Fluss | Fluss | Gas | Fluss | Gas | Gas | Fluss |
| von | | | | | | | Zelle I | WT1 | WT1 | WT2 | WT2 | Kolonne, Stufe 32 | Zelle II |
| nach | | | Kolonne, Stufe 18 | Kolonne, Stufe 19 | Kolonne, Stufe 30 | Kolonne, Stufe 32 | WT1 | WT2 | WT2 | Zelle II | Kolonne, Stufe 1 | | |
| Temperatur | | °C | 55 | 55 | 35,308 | 40,185 | 82,221 | 121,002 | 121,002 | 148,346 | 148,346 | 49,375 | 148,346 |
| Druck | | bar | 5,4 | 5,4 | 7 | 5,4 | 5,41 | 5,51 | 5,51 | 5,41 | 5,41 | 5,3 | 5,41 |
| Mengenstrom | | kmol/h | 7429 | 304,4 | 9452 | 25,37 | 22200 | 21290 | 911,5 | 20477 | 1722 | 622,4 | 16590 |
| Massenstrom | | kg/h | 524300 | 16890 | 681900 | 1456 | 1545000 | 1499000 | 46700 | 1467700 | 77270 | 35150 | 1189000 |
| Konzentrationen | | Einheit | | | | | | | | | | | |
| Leichtsieder | | mol/mol | 0,002171 | 0,067389 | 0,000027 | 0,018012 | 0,000078 | 0,000062 | 0,000451 | 0,000054 | 0,000369 | 0,058598 | 0,000054 |
| C5+ | | mol/mol | 0,000754 | 0,000196 | 0,00076 | 0,00016 | 0,000824 | 0,000816 | 0,001001 | 0,000769 | 0,001475 | 0,000151 | 0,000769 |
| Butane | | mol/mol | 0,052575 | 0,637443 | 0 | 0,91135 | 0,012787 | 0,005979 | 0,171766 | 0,00387 | 0,118826 | 0,873327 | 0,00387 |
| Butene (inkl. Butadiene) | | mol/mol | 0,043933 | 0,284611 | 0,000042 | 0,062215 | 0,061195 | 0,03518 | 0,668687 | 0,022766 | 0,518169 | 0,060001 | 0,022766 |
| H2O | | mol/mol | 0,300366 | 0,00992 | 0,332384 | 0,008228 | 0,324499 | 0,332066 | 0,147818 | 0,323807 | 0,332736 | 0,007893 | 0,323807 |
| NMP | | mol/mol | 0,600202 | 0,000441 | 0,666785 | 0,000035 | 0,600616 | 0,625897 | 0,010276 | 0,648735 | 0,028424 | 0,000033 | 0,648735 |

**Tabelle 2**

| | | | | | | | | | | | | | | |
|---|---|---|---|---|---|---|---|---|---|---|---|---|---|---|
| Strom | | | 1 | 1 | 13 | 14 | 11 | 4 | 4 | 8 | 8 | 5 | 5 | 3 |
| Aggregat | | | Fluss | Gas | Fluss | Fluss | Fluss | Fluss | Gas | Fluss | Fluss | Gas | Gas | Fluss |
| von | | | | | | | Zelle I | WT1 | WT1 | Zelle II | WT2 | Kolonne, Stufe 32 | Zelle III | |
| nach | | | Kolonne, Stufe 18 | Kolonne, Stufe 19 | Kolonne, Stufe 30 | Kolonne, Stufe 32 | WT1 | Zelle II | Kolonne, Stufe 1 | WT2 | Kolonne, Stufe 1 | | | |
| Temperatur | | °C | 55 | 55 | 35,308 | 40,185 | 67,023 | 110,016 | 110,016 | 113,016 | 148,342 | 148,342 | 49,375 | 148,342 |
| Druck | | bar | 5,4 | 5,4 | 7 | 5,4 | 5,41 | 5,41 | 5,41 | 5,41 | 5,41 | 5,41 | 5,3 | 5,41 |
| Mengenstrom | | kmol/h | 7429 | 304,4 | 9451 | 25,37 | 19460 | 18190 | 1270 | 18680 | 18091 | 589,8 | 622,4 | 16590 |
| Massenstrom | | kg/h | 524300 | 16890 | 681800 | 1456 | 1355000 | 1287000 | 67210 | 1323000 | 1296600 | 26470 | 35150 | 1189000 |
| Konzentrationen | | Einheit | | | | | | | | | | | | |
| Leichtsieder | | mol/mol | 0,002171 | 0,067389 | 0,000027 | 0,018012 | 0,000091 | 0,000065 | 0,000473 | 0,000064 | 0,000054 | 0,000369 | 0,058598 | 0,000054 |
| C5+ | | mol/mol | 0,000755 | 0,000197 | 0,000761 | 0,00016 | 0,000795 | 0,000794 | 0,000813 | 0,000792 | 0,00077 | 0,001477 | 0,000151 | 0,00077 |
| Butane | | mol/mol | 0,052575 | 0,637442 | 0 | 0,91135 | 0,021143 | 0,007906 | 0,210724 | 0,0075 | 0,00387 | 0,118832 | 0,873326 | 0,00387 |
| Butene (inkl. Butadiene) | | mol/mol | 0,043933 | 0,284611 | 0,000042 | 0,062213 | 0,081794 | 0,040048 | 0,679686 | 0,038412 | 0,022767 | 0,518198 | 0,06 | 0,022767 |
| H2O | | mol/mol | 0,300365 | 0,00992 | 0,332384 | 0,008228 | 0,309476 | 0,323995 | 0,101526 | 0,324087 | 0,323806 | 0,332703 | 0,007893 | 0,323806 |
| NMP | | mol/mol | 0,600201 | 0,000441 | 0,666784 | 0,000035 | 0,5867 | 0,627191 | 0,006779 | 0,629145 | 0,648733 | 0,028421 | 0,000033 | 0,648733 |

**Tabelle 3**

| | | | | | | | | | | | | | |
|---|---|---|---|---|---|---|---|---|---|---|---|---|---|
| Strom | | | 1 | 1 | 13 | 14 | 11 | 12 | 8 | 5 | 5 | 2 | 3 |
| Aggregat | | | Fluss | Gas | Fluss | Fluss | Fluss | Fluss | Gas | Fluss | Gas | Gas | Fluss |
| von | | | | | | | Zelle I | B1, Zelle II | B1 | WT2 | WT2 | Kolonne, Stufe 32 | Zelle III |
| nach | | | Kolonne, Stufe 18 | Kolonne, Stufe 19 | Kolonne, Stufe 30 | Kolonne, Stufe 32 | WT1 | WT2 | Kolonne, Stufe 1 | Zelle III | Kolonne, Stufe 1 | | |
| Temperatur | | °C | 55 | 55 | 35,308 | 40,185 | 78,65 | 117,38 | 117,38 | 148,342 | 148,342 | 49,375 | 148,342 |
| Druck | | bar | 5,4 | 5,4 | 7 | 5,4 | 5,41 | 5,51 | 5,51 | 5,41 | 5,41 | 5,3 | 5,41 |
| Mengenstrom | | kmol/h | 7429 | 304,4 | 9450 | 25,37 | 22110 | 21140 | 970,3 | 20540 | 603,1 | 622,4 | 16590 |
| Massenstrom | | kg/h | 524300 | 16890 | 681800 | 1456 | 1550000 | 1500000 | 50430 | 1472200 | 27070 | 35150 | 1189000 |
| Konzentrationen | | Einheit | | | | | | | | | | | |
| Leichtsieder | | mol/mol | 0,002171 | 0,067389 | 0,000027 | 0,018012 | 0,00008 | 0,000063 | 0,000456 | 0,000054 | 0,000369 | 0,058598 | 0,000054 |
| C5+ | | mol/mol | 0,000755 | 0,000197 | 0,000761 | 0,00016 | 0,000795 | 0,00079 | 0,000911 | 0,00077 | 0,001477 | 0,000151 | 0,00077 |
| Butane | | mol/mol | 0,052575 | 0,637443 | 0 | 0,91135 | 0,015456 | 0,00715 | 0,196414 | 0,003869 | 0,118833 | 0,873326 | 0,003869 |
| Butene (inkl. Butadiene) | | mol/mol | 0,043933 | 0,284611 | 0,000042 | 0,062215 | 0,06447 | 0,036904 | 0,66508 | 0,022768 | 0,518202 | 0,06 | 0,022768 |
| H2O | | mol/mol | 0,300365 | 0,00992 | 0,332384 | 0,008228 | 0,315461 | 0,32406 | 0,128118 | 0,323806 | 0,332698 | 0,007893 | 0,323806 |
| NMP | | mol/mol | 0,600201 | 0,000441 | 0,666784 | 0,000035 | 0,603737 | 0,631034 | 0,009021 | 0,648733 | 0,028421 | 0,000033 | 0,648733 |

**Tabelle 4**

| Variante | WT1 | | WT2 | |
|---|---|---|---|---|
| | Tein/°C | Taus/°C | Tein/°C | Taus/°C |
| Fig. 7 | 82,2 | 121,0 | 121,0 | 148,3 |
| Fig.1 | 67,0 | 110,0 | 110,0 | 148,3 |
| Fig. 6 | 78,7 | 117,4 | 117,4 | 148,3 |

### Bezugszeichenliste

- 1, 13, 14: Zulaufströme
- 2: Kopfproduktstrom
- 3: Sumpfproduktstrom
- 4, 5: teilverdampfte Ströme
- 6, 8, 10: Dampfströme
- 7, 9, 11, 12: Flüssigkeitsteilströme
- 15, 16, 17: Ströme regenerierten Extraktionsmittels

- K: Kolonne
- WT1, WT2: Wärmetauscher
- W1, W2: Wehre

- I, II, III: flüssigkeitsdurchströmte Zellen

## Patentansprüche

1. Destillationseinrichtung umfassend eine Kolonne (K), zur Auftrennung eines Zulaufstromes (1) in einen Kopfproduktstrom (2), einen Sumpfproduktstrom (3) und gegebenenfalls einen oder mehrere Seitenabzugsströme,
mit drei oder mehr hintereinander flüssigkeitsdurchströmten Zellen (I, II, III), wobei zumindest die erste Zelle in den Sumpf der Kolonne (K) integriert ist, zur mehrstufigen Aufheizung und Teilverdampfung der die Zellen durchströmenden Flüssigkeit mit Ausnahme der Flüssigkeit aus der letzten Zelle in jeweils einer Verdampferstufe **dadurch gekennzeichnet, dass** Mittel zur Leitung der Flüssigkeit aus jeder der drei oder mehreren hintereinander flüssigkeitsdurchströmten Zellen (I, II, III) mit Ausnahme der letzten Zelle durch eine Verdampferstufe zum Teilverdampfen der Flüssigkeit darin unter Erhalt jeweils eines teilverdampften Stromes (4,5), Mittel zur vollständigen oder teilweisen Zuführung des teilverdampften Stroms (4,5) in die jeweils in Strömungsrichtung nächstfolgenden Zelle und ein Flüssigkeitsrücklauf aus einer oder mehreren der drei oder mehr Zellen (I, II, III), mit Ausnahme der ersten Zelle in die jeweils unmittelbar vorhergehende Zelle vorgesehen sind.

2. Destillationseinrichtung nach Anspruch 1, **dadurch gekennzeichnet, dass** die Aufheizung und Teilverdampfung durch prozessinterne und/oder externe Energiequellen erfolgt.

3. Destillationseinrichtung nach Anspruch 1 oder 2, **dadurch gekennzeichnet, dass** die Aufheizung und Teilverdampfung durch Massenströme erfolgt.

4. Destillationseinrichtung nach Anspruch 3, **dadurch gekennzeichnet, dass** die Massenströme Wasserdampf oder heißes Kondensat sind.

5. Destillationseinrichtung nach einem der Ansprüche 1 bis 4, **dadurch gekennzeichnet, dass**
- die Aufheizung und Teilverdampfung der die erste Zelle durchströmenden Flüssigkeit mittels prozessinterner Massenströme und
- die Aufheizung und Teilverdampfung der die vorletzte Zelle durchströmenden Flüssigkeit mittels externer Energiequellen erfolgt.

6. Destillationseinrichtung nach einem der Ansprüche 1 bis 5, **dadurch gekennzeichnet, dass** sämtliche der drei oder mehr hintereinander flüssigkeitsdurchströmten Zellen (I, II, III) in den Sumpf der Kolonne (K) integriert sind.

7. Destillationseinrichtung nach Anspruch 6, **dadurch gekennzeichnet, dass** drei Zellen (I, II, III) in den Sumpf der Kolonne (K) integriert sind.

8. Destillationseinrichtung nach einem der Ansprüche 1 bis 7, **dadurch gekennzeichnet, dass** die Verdampferstufen Wärmetauscher (WT1, WT2) sind.

9. Destillationseinrichtung nach einem der Ansprüche 1 bis 8, **dadurch gekennzeichnet, dass** der Flüssigkeitsrücklauf als direkter Flüssigkeitsüberlauf über ein Wehr (W1, W2), als getauchter Zulauf oder als Siphon ausgebildet ist.

10. Verfahren zur Durchführung einer Destillation oder Extraktivdestillation unter Verwendung einer Destillationseinheit nach einem der Ansprüche 1 bis 9, wobei man einen mehrere Komponenten enthaltenden Zulaufstrom in einen Kopfproduktstrom, einen Sumpfproduktstrom und gegebenenfalls einen oder mehrere Seitenabzugsströme auftrennt.

11. Verfahren nach Anspruch 10 zur Trennung eines Zulaufstromes in einen Butan(e) enthaltenden Kopfproduktstrom und einen Buten(e) und gegebenenfalls Butadien(e) enthaltenden Sumpfproduktstrom durch Extraktivdestillation.

12. Verfahren nach Anspruch 10 zur Trennung eines Zulaufstromes in einen Buten(e) und gegebenenfalls Butan(e) enthaltenden Kopfproduktstrom und einen Butadien(e) enthaltenden Sumpfproduktstrom durch Extraktivdestillation.

13. Verfahren nach Anspruch 11 oder 12, **dadurch gekennzeichnet, dass** das Verfahren eine Extraktivdestillation zur Auftrennung eines Reaktionsgemisches aus der Dehydrierung von Butanen zur Herstellung von Butenen oder aus einer Oxidehydrierung von Butanen zur Herstellung von Butadien, ist.

## Claims

1. A distillation apparatus comprising a column (K) for fractionating a feed stream (1) into a tops product stream (2), a bottoms product stream (3) and optionally one or more side draw streams,
having three or more serially liquid-traversed cells (I, II, III), wherein at least the first cell is integrated into the bottom of the column (K), for multistage heating and part-evaporation of the liquid traversing the cells, with the exception of the liquid from the last cell, in one evaporator stage in each case, wherein means for passing the liquid from each of the three or more serially liquid-traversed cells (I, II, III), with the exception of the last cell, through an evaporator stage for part-evaporation of the liquid therein to obtain a part-evaporated stream (4,5) in each case, means for completely or partially supplying the part-evaporated stream (4,5) to the respective next downstream cell, and a liquid reflux from one or more of the three or more cells (I, II, III), with the exception of the first cell, into the respective immediately preceding cell are provided.

2. The distillation apparatus according to claim 1, wherein the heating and part-evaporation is effected by in-process and/or external energy sources.

3. The distillation apparatus according to either of claims 1 and 2, wherein the heating and part-evaporation is effected by mass flows.

4. The distillation apparatus according to claim 3, wherein the mass flows are steam or hot condensate.

5. The distillation apparatus according to any of claims 1 to 4, wherein
- the heating and part-evaporation of the liquid traversing the first cell is effected using in-process mass flows and
- the heating and part-evaporation of the liquid traversing the penultimate cell is effected using external energy sources.

6. The distillation apparatus according to any of claims 1 to 5, wherein all of the three or more serially liquid-traversed cells (I, II, III) are integrated into the bottom of the column (K).

7. The distillation apparatus according to claim 6, wherein three cells (I, II, III) are integrated into the bottom of the column (K).

8. The distillation apparatus according to any of claims 1 to 7, wherein the evaporator stages are heat exchangers (WT1, WT2).

9. The distillation apparatus according to any of claims 1 to 8, wherein the liquid reflux is designed as a direct liquid overflow over a weir (W1, W2), as an immersed feed or as a siphon.

10. A process for performing a distillation or extractive distillation using a distillation unit according to any of claims 1 to 9, wherein a feed stream comprising a plurality of components is fractionated into a tops product stream, a bottoms product stream and optionally one or more side draw streams.

11. The process according to claim 10 for separating a feed stream into a tops product stream comprising butane(s) and a bottoms product stream comprising butene(s) and optionally butadiene(s) by extractive distillation.

12. The process according to claim 10 for separating a feed stream into a tops product stream comprising butene(s) and optionally butane(s) and a bottoms product stream comprising butadiene(s) by extractive distillation.

13. The process according to claim 11 or 12, wherein the process is an extractive distillation for fractionating a reaction mixture from the dehydrogenation of butanes to produce butenes or from an oxydehydrogenation of butanes to produce butadiene.

## Revendications

1. Dispositif de distillation comprenant une colonne (K), pour la séparation d'un flux d'alimentation (1) en un flux de produit de tête (2), un flux de produit de fond (3) et éventuellement un ou plusieurs flux de soutirage latéraux,
comportant trois cellules ou plus traversées l'une après l'autre par un liquide (I, II, III), au moins la première cellule étant intégrée dans le fond de la colonne (K), pour le chauffage en plusieurs étapes et l'évaporation partielle du liquide traversant les cellules à l'exception du liquide de la dernière cellule à chaque fois dans un étage d'évaporateur **caractérisé en ce que** des moyens pour la conduite du liquide de chacune des trois cellules ou plus traversées l'une après l'autre par un liquide (I, II, III) à l'exception du liquide de la dernière cellule à chaque fois dans un étage d'évaporateur pour l'évaporation partielle du liquide dans celui-ci avec obtention à chaque fois d'un flux évaporé partiellement (4,5), des moyens pour l'alimentation totale ou partielle du flux évaporé partiellement (4,5) dans la cellule suivante à chaque fois dans la direction d'écoulement et un retour de liquide d'une ou de plusieurs des trois cellules ou plus (I, II, III), à l'exception de la première cellule à chaque fois dans la cellule immédiatement précédente, sont prévues.

2. Dispositif de distillation selon la revendication 1, **caractérisé en ce que** le chauffage et l'évaporation partielle sont réalisés par l'intermédiaire de sources d'énergie internes au procédé et/ou externes.

3. Dispositif de distillation selon la revendication 1 ou 2, **caractérisé en ce que** le chauffage et l'évaporation partielle sont réalisés par flux massiques.

4. Dispositif de distillation selon la revendication 3, **caractérisé en ce que** les flux massiques sont de la vapeur d'eau ou un condensat chaud.

5. Dispositif de distillation selon l'une quelconque des revendications 1 à 4, **caractérisé en ce que**
- le chauffage et l'évaporation partielle du liquide traversant la première cellule sont réalisés au moyen de flux massiques internes au procédé et
- le chauffage et l'évaporation partielle du liquide traversant l'avant-dernière cellule sont réalisés au moyen de sources d'énergie externes.

6. Dispositif de distillation selon l'une quelconque des revendications 1 à 5, **caractérisé en ce que** toutes les trois cellules ou plus traversées l'une après l'autre par un liquide (I, II, III) sont intégrées dans le fond de la colonne (K).

7. Dispositif de distillation selon la revendication 6, **caractérisé en ce que** trois cellules (I, II, III) sont intégrées dans le fond de la colonne (K).

8. Dispositif de distillation selon l'une quelconque des revendications 1 à 7, **caractérisé en ce que** les étages d'évaporateur sont des échangeurs de chaleur (WT1, WT2).

9. Dispositif de distillation selon l'une quelconque des revendications 1 à 8, **caractérisé en ce que** le retour de liquide est formé comme un trop-plein de liquide direct par l'intermédiaire d'un déversoir (W1, W2), en tant qu'alimentation plongée ou en tant que siphon.

10. Procédé pour la mise en oeuvre d'une distillation ou d'une distillation extractive avec l'utilisation d'une unité de distillation selon l'une quelconque des revendications 1 à 9, dans lequel on sépare un flux d'alimentation contenant plusieurs composants en un flux de produit de tête, un flux de produit de fond et éventuellement un ou plusieurs flux de soutirages latéraux.

11. Procédé selon la revendication 10 pour la séparation d'un flux d'alimentation en un flux de produit de tête contenant un ou des butane (s) et un flux de produit de fond contenant un ou des butène(s) et éventuellement un ou des butadiène(s) par distillation extractive.

12. Procédé selon la revendication 10 pour la séparation d'un flux d'alimentation en un flux de produit de tête contenant un ou des butène(s) et éventuellement un ou des butane(s) et un flux de produit de fond contenant un ou des butadiène(s) par distillation extractive.

13. Procédé selon la revendication 11 ou 12, **caractérisé en ce que** le procédé est une distillation extractive pour la séparation d'un mélange de réaction provenant de la déshydrogénation de butanes pour la préparation de butènes ou provenant d'une oxydéshydrogénation de butanes pour la préparation de butadiène.
